# EUROPÄISCHE PATENTSCHRIFT

(11) **EP 1 242 315 B1**
(45) Veröffentlichungstag und Bekanntmachung des Hinweises auf die Patenterteilung: **02.02.2005**
(21) Anmeldenummer: 00987327.4
(22) Anmeldetag: 30.11.2000
(51) Int. Cl.: C02F 1/52, C02F 1/72

(54) **ZUSAMMENSETZUNG UND VERFAHREN ZUR AUFBEREITUNG VON VERUNREINIGTEN WÄSSERN UND GEWÄSSERSEDIMENTEN**
COMPOSITION AND METHOD FOR TREATING POLLUTED WATERS AND WATER SEDIMENTS
COMPOSITION ET PROCEDE DE TRAITEMENT D'EAUX POLLUEES ET DE SEDIMENTS D'EAUX DE SURFACE

(30) Priorität: 03.12.1999 DE 19958271
(43) Veröffentlichungstag der Anmeldung: 25.09.2002
(73) Patentinhaber: Panning, Frank, 15366 Dahlwitz-Hoppegarten (DE); Kretschmer, Klaus, 13055 Berlin (DE); Hillbrecht, Berit, 15366 Dahlwitz-Hoppegarten (DE)
(72) Erfinder: Panning, Frank, 15366 Dahlwitz-Hoppegarten (DE); Kretschmer, Klaus, 13055 Berlin (DE); Hillbrecht, Berit, 15366 Dahlwitz-Hoppegarten (DE)
(74) Vertreter: Hengelhaupt, Jürgen, Dipl.-Ing.
(86) Internationale Anmeldenummer: PCT/EP2000/012041
(87) Internationale Veröffentlichungsnummer: WO 2001/040120

(56) Entgegenhaltungen:
- EP-A- 0 997 436
- WO-A-99/58457
- DE-A- 19 821 609
- US-A- 3 956 121
- US-A- 5 384 036
- US-A- 5 746 994

## Beschreibung

Die Erfindung betrifft eine Zusammensetzung und ein Verfahren zur Aufbereitung von verunreinigten Wässern und Gewässersedimenten gemäß den Oberbegriffen der Ansprüche 1 und 9.

Die Aufbereitung von Abwässern und die Revitalisierung von natürlichen Gewässern gewinnt zunehmend an Bedeutung. Durch den über die Haushalts- und Sanitärabwässer, Wasch- und Spülmittel, Gülle, künstliche Dünger etc. bedingten und seit Jahren stetig zunehmenden Nährstoffeintrag sowie durch die zunehmende Versauerung der Gewässer infolge saurer Zuflüsse wird das natürliche Gleichgewicht der Gewässer gestört und die natürliche Selbstreinigung der Gewässer gehemmt.

Dadurch reichern sich Schad- und Nährstoffe im Wasser und den Gewässersedimenten an. Infolge dieser Prozesse kommt es z.T. zu drastischen Verschiebungen im Artenspektrum des gesamten Ökosystems. Dies führt zu großen Sauerstoffschwankungen im Wasserkörper bzw. zu Sauerstoffarmut der sedimentnahen Wasserschichten bzw. der Sedimente selbst, begleitet von der Remobilisierung von Nähr- und Schadstoffen.

Für die Entfernung von Wasserinhaltsstoffen ist die Flockung mittels Fe(III)- und Aluminiumsalzen Stand der Technik. Durch Einschluß in oder Adsorption an der Flocke können auch Wasserinhaltsstoffe entfernt werden, die Fällungsprozessen nicht zugänglich sind.

Entsprechend DE-AS 19 07 359 werden u. a. Aluminiumsulfat und -chlorid, Eisen(II)-und Eisen(III)-sulfat, Eisen(II)-und Eisen(III)-chlorid verwendet. Die erzeugten Flocken weisen jedoch u.U. ein für natürliche Gewässer unbefriedigendes Sedimentationsverhalten auf; insbesondere die Eisensalze neigen zur Bildung kolloidaler Niederschläge.

Nachteilig beim Einsatz dieser Flockungsmittel ist der Verbleib der Anionen im Wasser und damit eine unerwünschte Aufsalzung und Versäuerung des Wassers. Es werden auch basische Metallsalze der Formel Mₙ(OH) ₘX₃ₙ - ₘ eingesetzt, bei welchen M für Eisen(III) und Aluminium, X für ein einwertiges Anion steht und zusätzlich ein mehrwertiges Anion Y einer zwei- oder mehrwertigen Säure (z.B. Phosphorsäure, Kieselsäure, Chromsäure, Carbonsäuren, Sulfonsäuren) in einem sehr kleinen Molverhältnis in die Verbindung eingeführt wurde (DE-AS 19 07 359).

Der Einsatz derartiger Flockungsmittel zum Zweck der Seenrestauration hat sich nicht bewährt, weil die Größe der dabei entstehenden Flocken zur nachhaltigen Schädigung der Zooplanktonpopulation führte.

Um die Nachteile der Aufsalzung und Versäuerung des Wassers zu vermeiden, wurde vorgeschlagen, dem Wasser Eisen(III)- und/oder Aluminiumnitrate zuzusetzen und die Nitrationen anschließend zu molekularem Stickstoff zu reduzieren. Die Reduktion erfolgt beispielsweise durch Denitrifikation (DE 38 38 864).

Dieses Verfahren ist speziell für die Anforderungen einer Abwasserreinigung entwickelt worden. Die eingesetzten Nitrate sind in Wasser gut löslich, wobei allerdings keine Sedimentation des Nitratanions zu erwarten ist. Da Nitrifikanten überwiegend sessile Organismen sind, müssen Substrat und Biomasse stetig miteinander in Kontakt gehalten werden.

Aus der US 5,500,131 ist die Behandlung des Wassers mit Calciumcarbonat (Kalk) und Metallsalzen als Flockungsmittel bekannt. Als Metallsalze werden u.a. Aluminium- und Eisenchloride, - sulfate, - nitrate verwendet.

Die Anwendung dieser Produkte zur effektiven Reinigung ist jedoch auf den Wasserkörper beschränkt. Die sedimentierten Flocken bilden eine gasdurchlässige Membran auf der Sedimentoberfläche aus, die zusätzlich als Deckelage wirkt. Der Abbau organischer Sedimente selbst wird geringfügig intensiviert.

Es ist die Behandlung der Sedimente am Boden der Gewässer mit Kalk und Fermentierungspilzen unter zusätzlicher Belüftung des Schlamms bekannt (JP 60-106 592A). Hierbei werden zwar die Abbauprozesse intensiviert, jedoch ist das Einbringen fremder Organismen stets mit erheblichen Risiken für das Ökosystem und aufwendigen Genehmigungsverfahren verbunden.

In der DE-40 05 064 C wird die Behandlung von Gewässersedimenten mit FeO, Fe(OH)₂ und/oder Fe(OH) ₃ unter Sauerstoff- und Bewegungseintrag beschrieben. Hierdurch wird der biologische Abbau unterstützt und Phosphate und Schwefelwasserstoff gebunden. Der Schwefelwasserstoff kann bei ausreichendem Sauerstoff bis zum elementaren Schwefel abgebaut werden, der am Gewässerboden ausfällt.

Diese Behandlung ist mit einer für den Sauerstoffeintrag erforderlichen Wasserumwälzung und somit einer Gefahr der Aufwirbelung und Verfrachtung des Schlamms am Gewässerboden verbunden. Der Prozeß wird limitiert durch die Sauerstoffsättigungsgrenze des Wassers bzw. durch den hohen erforderlichen mechanischen Energieeintrag zur Wasserumwälzung.

In der DE 34 30 484 A1 wird ein Verfahren zur oxidativen Reinigung von Abwässern mit speziell aktivierten Kohlenstoffträgern mit Fe(III)(NO3)3 und mit H2O2 als Oxidationsmittel beschrieben. Die Aktivierung des Kohlenstoffträgers erfolgt mittels anodischer Oxidation in Mineralsäuren. Die Bildung von nitrathaltigen amorphen Eisenoxihydratstrukturen ist dabei auszuschließen. Es wird keine makroporöse Flockenstruktur gebildet.

Der Erfindung liegt die Aufgabe zugrunde, ein einfaches und wirksames Verfahren und eine Zusammensetzung für die Aufbereitung von Wässern und Gewässersedimenten zu finden, durch die wasserschädliche Inhaltsstoffe weitestgehend abgebaut oder gebunden, mikrobiologische Abbauprozesse langfristig gefördert und die Wasserqualität verbessert werden können, ohne das Wasser zusätzlich aufzusalzen oder den pH-Wert zu erniedrigen. Insbesondere sollen Phosphate und Schwermetallionen unschädlich gemacht bzw. in ihrer Ökotoxizität herabgesetzt werden.

Erfindungsgemäß wird die Aufgabe durch die Merkmale der Ansprüche 1 und 9 gelöst. Die Zusammensetzung nach der Erfindung ist dadurch gekennzeichnet, daß sie eine oder mehrere Verbindungen enthält, die durch Umsetzung von Eisen(III)nitrat und/oder Aluminiumnitrat und Wasserstoffperoxid in Gegenwart einer Base hergestellt sind, und welche Sauerstoff und/oder Nitrationen als Sauerstoffdonatoren beim Kontakt mit Wasser langanhaltend freisetzen.

Die Zusammensetzungen nach der Erfindung weisen neben einer hohen Adsorptionsfähigkeit gegenüber Nährstoffen und Schadstoffen eine Depotwirkung für Sauerstoff und Sauerstoffdonatoren auf.

Die erfindungsgemäße Zusammensetzung enthält modifizierte eisen(III)- und/oder aluminiumhaltige Verbindungen mit Depoteigenschaften.

Es wurde gefunden, daß durch Umsetzung von Eisen(III)- und/oder Aluminiumnitrat mit Wasserstoffperoxid in Gegenwart einer Base eisen(III)-und/oder aluminiumhaltige Verbindungen gebildet werden, die eine große spezifische Oberfläche aufweisen und in ihrer Struktur Sauerstoff in Form eines Depots eingeschlossen enthalten. Die Nitrationen wirken als Sauerstoffdonator.

Überraschenderweise werden durch die erfindungsgemäße Herstellung Nitrationen und Sauerstoff in die Struktur der Zusammensetzung so eingeschlossen, daß sie im Wasser und insbesondere auf und im Gewässersediment allmählich freigesetzt werden.

Durch die sukzessive Freisetzung von Sauerstoff und Nitrationen werden einerseits den Mikroorganismen diese Sauerstoff- und Nährstoffquellen über einen längeren Zeitraum zur Verfügung gestellt und damit die biologischen Abbauprozesse im Wasser und Gewässersediment gefördert und effektiviert .

Die Nitrationen werden dabei vollständig in Sauerstoff und Stickstoff abgebaut, so daß keine Nitratanreicherung im Wasser bzw. Gewässersediment erfolgt. Der durch die biologischen Prozesse freigesetzte Sauerstoff steht den Mikroorganismen zur Verfügung, der Stickstoff entweicht.

Andererseits wird durch den freigesetzten Sauerstoff und die Nitrationen die Möglichkeit geschaffen, im Wasser und den Gewässersedimenten vorhandene organische Schadstoffe oxidativ abzubauen. Anaerobe Prozesse, die zur Bildung von H₂S führen, werden unterdrückt.

Ein weiterer wesentlicher Vorteil der sukzessiven Freisetzung von Sauerstoff und Nitrationen besteht darin, daß oxidative Umsetzungen gefördert werden, durch die geeignete Bindungspartner für Schad- und Nährstoffe regeneriert und die Bindungs- und Festlegungskapazität der eisen(III)- und/oder aluminiumhaltigen Verbindungen dadurch erhöht werden können.

Durch die sukzessive Freisetzung von Sauerstoff und Nitrationen wird die Reduktion der Eisen(III)-Ionen zu Eisen(II)-Ionen vermieden, welches für Bindungsund Festlegungsvorgänge unwirksam ist. Durch diese Vorgänge wird zusätzlich die Bindungskapazität der erfindungsgemäßen Zusammensetzung gegenüber Schadund Nährstoffen, insbesondere gegenüber Phosphaten und Schwermetallen, erhöht.

Darüber hinaus werden durch die erfindungsgemäße Zusammensetzung Sulfidionen in wasserunlöslicher Form gebunden. Der Schwefel wird dabei als Eisensulfid ausgefällt und im Sediment festgelegt.

Dadurch kann die Toxizität und die Geruchsemission durch H₂S stark zurückgedrängt werden. Diese an sich bekannten Prozesse werden jedoch durch die erfindungsgemäße Zusammensetzung dahin gehend beeinflußt, daß aufgrund des aus der Zusammensetzung sukzessiv freigesetzten Sauerstoffes die Eisensulfide weiter abgebaut werden zum elementaren Schwefel, der sich im Sediment ablagert. Dadurch, daß das dabei aus dem Sulfid freigesetzte Eisen weiteren Bindungs- und Fällungsprozessen als Bindungspartner zur Verfügung steht, wird die Kapazität und Effektivität der Bindung bzw. Festlegung von Schad- und Nährstoffen wesentlich erhöht.

Die erfindungsgemäßen Zusammensetzungen binden außerdem die im Wasser bzw. Gewässersediment vorhandenen Phosphationen als Eisen (III)- bzw. Aluminiumphosphat. Die gebundenen Phosphate lagern sich im Gewässersediment ab und sind damit den Produzenten (Algen) für ihre Stoffwechselprozesse nicht mehr zugänglich. Ferner werden Schwermetalle irreversibel in die Struktur der erfindungsgemäßen, modifizierten eisen(III)- und/oder aluminiumhaltigen Verbindungen eingelagert bzw. an diesen adsorbiert und damit in ihrer Ökotoxizität herabgesetzt.

Ein besonderer Vorteil der erfindungsgemäßen Zusammensetzung für diese Prozesse ist deren makroporöse Flockenstruktur mit einer im Vergleich zu den als Flockungsmitteln bekannten Eisen(III)-und Aluminiumsalzen wesentlich größeren adsorptiven Oberfläche und besserem Sedimentationsverhalten.

Dadurch wird die Kapazität und Effektivität der Festlegung von Schad- und Nährstoffen wesentlich erhöht.

Die Kondensation schreitet bei Abnahme der Wasserstoffionenkonzentration infolge Verdünnung der Lösung mit Wasser oder infolge des Basenzusatzes bis zur Bildung dreidimensionaler, hochmolekularer, kolloider Kondensate (Netzwerkstruktur) der Bruttozusammensetzung (FeOOH)ₓ x H₂O fort, die zunehmend schwerlöslicher werden und schließlich in großflockigen Agglomeraten ausfallen.

Aufgrund der besonderen Struktur der erfindungsgemäßen Zusammensetzungen können auch Wasserinhaltsstoffe entfernt werden, die mit den bekannten Fällungsmitteln nicht gebunden werden können, wie z.B. sperrige Algenformen.

Außerdem bildet die erfindungsgemäße Zusammensetzung aufgrund ihrer Struktur eine ausgezeichnetes Substrat für die Ansiedlung von Mikroorganismen und unterstützt damit die biologische Reinigung zusätzlich.

Durch die Bindung und Festlegung der Nährstoffe, insbesondere der Phosphate, wird den Algen eine wesentliche Wachstumsgrundlage entzogen und auf diese Weise Algenmassenentwicklungen unterbunden. Weiterhin werden infolge der sukzessiven Sauerstofffreisetzungen aus dem Depot der Flocken reduktive lebensfeindliche Milieubedingungen langfristig vermieden.

Es wurde ferner gefunden, daß die erfindungsgemäßen Zusammensetzungen eine Art Grundgerüst für die Wasser- und Gewässersedimentaufbereitung darstellen.

Die Depotwirkung ist. dabei jedoch nicht auf Sauerstoff und Nitrationen beschränkt. Als Sauerstoffdonatoren können zusätzlich z.B. auch Sulfate wie Eisensulfat dem Herstellungsprozeß zugeführt werden. Dabei können die Sulfationen, z.B. als CaSo4 oder MgSo4 zugeführt werden, also als Verbindungen, die auch in den Wässern vorkommen. Es sollten allerdings nicht mehr Sulfationen zugesetzt werden als maximal 50 Gew.%, bezogen auf die jeweils in Abhängigkeit vom Gewässer eingesetzten Nitrationen.

Es ist auch möglich, Zusatzstoffe, die ggf.für eine Gewässerrestaurierung in Abhängigkeit vom jeweiligen Gewässer sinnvoll sind, wie z.B. das zusätzliche Einbringen von CaCO₃ in das Wasser oder das Sediment, im Herstellungsprozeß ebenfalls zuzusetzen oder aus den entsprechenden Ausgangsstoffen im Herstellungsprozeß zu bilden.

Diese polaren Verbindungen werden in analoger Weise in die Gerüststruktur der eisen(III)- und/oder aluminiumhaltigen Verbindung eingeschlossen und ebenfalls suksessive im Wasser bzw. Gewässersediment freigesetzt.

Damit wird der Einsatz der erfindungsgemäßen Zusammensetzungen für eine umfassende und nachhaltige Gewässerrestaurierung ohne zusätzliche Behandlungsschritte möglich. Die Herstellung der erfindungsgemäßen Zusammensetzung erfolgt durch Umsetzung von Eisen(III)- und/oder Aluminiumnitrat mit Wasserstoffperoxid in Gegenwart einer Base.

Die Umsetzung wird vorteilhaft bei einem pH-Wert oberhalb 6, bevorzugt bei einem pH-wert zwischen 7 und 10, hergestellt, wobei die pH-Werteinstellung mittels einer Base erfolgt.

Als Base werden die Hydroxide von ein-, zweiund/oder dreiwertigen Metalle, insbesondere des Calciums, Magnesiums, Natriums, Kaliums eingesetzt.

Bevorzugt werden Calciumhydroxid und Magnesiumhydroxid verwendet, da diese im Wasser vorhandene Carbonate, Sulfate und Phosphate unter Bildung schwerlöslicher Niederschläge binden.

Die Umsetzung kann vorteilhaft in Gegenwart von üblichen Oxidationskatalysatoren durchgeführt werden.

Gegebenenfalls kann die Herstellung der erfindungsgemäßen Zusammensetzung in Gegenwart weiterer, für die Gewässerrestauration erforderlicher Zuschlagstoffe erfolgen. In Abhängigkeit von der jeweiligen Wasserbeschaffenheit und der jeweiligen Aufgabenstellung kann beispielsweise im Herstellungsprozeß CaCO₃ zugegeben werden, z.B. mit dem Ziel der Erhöhung des Pufferungsvermögens des Systems.

Beispielsweise können durch eine Initiierung der gewässerinternen Kalzitfällung zusätzlich Phosphate, Aminosäuren, Fettsäuren, Huminsäuren dem Wasserkörper entzogen werden und das Vermögen der Sedimente zur Nährstoffbindung nachhaltig erhöht werden.

Die erfindungsgemäß hergestellten Zusammensetzungen sind so beschaffen, daß sie nach dem Einbringen in das Wasser relativ rasch sedimentieren, auf ihrem Sedimentationsweg Nährstoffe adsorbieren. Auf der Sedimentoberfläche bilden sie zunächst eine Sperrschicht gegenüber dem aus den Sedimenten remobilisierten Phosphat, welches im folgenden Schritt an den amorphen Eisen-, Aluminium- oder Kalziumoberflächen festgelegt wird. Beim allmählichen Eindringen in das Gewässersediment desorbieren allmählich Sauerstoff bzw. Nitrationen und stellen so den Mikroorganismen die für aerobe Abbauprozesse erforderlichen Sauerstoffquellen zur Verfügung.

Folglich werden reduktive Prozesse, die zur H₂S-Bildung und Schwermetallmobilisierung führen, vermieden.

Eventuell vorhandene Restgehalte an Wasserstoffperoxid stören die gewünschten Prozesse nicht, sondern unterstützen den oxidativen Abbau der Schadstoffe im Wasser und Gewässersediment.

Die erfindungsgemäßen Zusammensetzungen werden zur Aufbereitung von nähr- und schadstoffbelasteten Wässern und Gewässersedimenten eingesetzt.

Sie werden in einem einfachen Herstellungsprozeß gemäß der Erfindung hergestellt und ohne weitere Aufbereitung, Reinigung, Separierung etc. dem Wasser bzw. Gewässer in einem einzigen Schritt zugesetzt. Durch den geringen technischen und energetischen Aufwand sowohl für die Herstellung der Zusammensetzung als auch die Gewässerbehandlung, gestaltet sich der Prozeß der Aufbereitung von nährund schadstoffbelasteten Wässern und Gewässersedimenten insgesamt einfach und sehr effektiv.

Durch die Behandlung der Wässer und Gewässersedimente mit den erfindungsgemäßen Zusammensetzungen werden Phosphate festgelegt, Sulfide gebunden, Schwermetalle in ökotoxikologisch ungiftigere Verbindungen überführt und mikrobiologische Abbauprozesse gefördert. Dabei erfolgt keine Aufsalzung oder Versäuerung des Wassers.

## Patentansprüche

1. Zusammensetzung mit Depotwirkung,
**dadurch gekennzeichnet, daß**
die Zusammensetzung eine oder mehrere Verbindungen enthält, die durch Umsetzung von Eisen(III)nitrat und/oder Aluminiumnitrat und Wasserstoffperoxid in Gegenwart einer Base hergestellt sind, und welche Sauerstoff und/oder Nitrationen als Sauerstoffdonatoren beim Kontakt mit Wasser langanhaltend freisetzen.

2. Zusammensetzung nach Anspruch 1, **dadurch gekennzeichnet, daß** während der Umsetzung von Eisen(III)nitrat und/oder Aluminiumnitrat mit Wasserstoffperoxid zusätzlich Sulfationen zugesetzt werden, vorzugsweise maximal 50 Gew% bezogen auf das eingesetzte Nitrat.

3. Zusammensetzung nach Anspruch 1,
**dadurch gekennzeichnet, daß** als Base die Hydroxide von ein-, zwei- und/oder dreiwertigen Metallen, insbesondere des Calciums, Magnesiums, Natriums, Kaliums eingesetzt sind.

4. Zusammensetzung nach den Ansprüchen 1 und 3,
**dadurch gekennzeichnet, daß** als Base Calciumhydroxid und/oder Magnesiumhydroxid eingesetzt sind.

5. Zusammensetzung nach den Ansprüchen 1 bis 4,
**dadurch gekennzeichnet, daß** die Umsetzung bei einem pH-Wert oberhalb 6, vorzugsweise bei einem pH-Wert zwischen 7 und 10, erfolgt.

6. Zusammensetzung nach den Ansprüchen 1 bis 5,
**dadurch gekennzeichnet, daß** die Umsetzung in Gegenwart von Oxidationskatalysatoren erfolgt.

7. Zusammensetzung nach Anspruch 1,
**dadurch gekennzeichnet, daß** die Umsetzung in Gegenwart von Zuschlagsstoffen erfolgt, insbesondere von Stoffen, die für eine Gewässerrestaurierung bekannt sind.

8. Zusammensetzung nach den Ansprüchen 1 und 7,
**dadurch gekennzeichnet, daß** die Umsetzung in Gegenwart von Carbonaten und/oder Sulfaten erfolgt.

9. Verfahren zur Aufbereitung von schadstoffbelasteten Wässern und Gewässersedimenten,
**dadurch gekennzeichnet, daß** eine eisen(III)-und/oder aluminiumhaltige Verbindungen enthaltende Suspension, die durch Umsetzung von Eisen(III)-und/oder Aluminiumnitrat mit Wasserstoffperoxid in Gegenwart einer Base hergestellt wurde, in das Wasser und/oder die Gewässersedimente eingebracht wird.

10. Verfahren nach Anspruch 9, dadurch gekenn-zeichnet, daß während der der Umsetzung von Eisen(III)nitrat und/oder Aluminiumnitrat mit Wasserstoffperoxid zusätzlich Sulfationen zugesetzt werden, vorzugsweise maximal 50 Gew% bezogen auf das eingesetzte Nitrat.

11. Verfahren nach Anspruch 9, **dadurch gekennzeichnet, daß** als Base die Hydroxide von ein-, zwei- und/oder dreiwertigen Metallen, insbesondere des Calciums, Magnesiums, Natriums, Kaliums, vorzugsweise in Gegenwart von Calciumund/oder Magnesiumhydroxid eingesetzt werden.

12. Verfahren nach den Ansprüchen 9 und 10,
**dadurch gekennzeichnet, daß** die Umsetzung bei einem pH-Wert oberhalb 6, vorzugsweise bei einem pH-Wert zwischen 7 und 10, vorgenommen wird.

13. Verfahren nach den Ansprüchen 9 bis 11, **dadurch gekennzeichnet, daß** die Umsetzung in Gegenwart von Oxidationskatalysatoren vorgenommen wird.

14. Verfahren nach Anspruch 9, **dadurch gekennzeichnet, daß** die Umsetzung in Gegenwart von Zuschlagsstoffen durchgeführt wird, insbesondere von Stoffen, die für eine Gewässerrestaurierung bekannt sind.

15. Verfahren nach den Ansprüchen 9 und 13, **dadurch gekennzeichnet, daß** die Umsetzung in Gegenwart von Calciumcarbonat und/oder Sulfaten durchge-führt wird.

## Claims

1. Composition with a depot effect,
**characterized in that**
the composition includes one or more compounds, which are produced by reacting Fe(III) nitrate and/or aluminum nitrate and hydrogen peroxide in the presence of a base and which release oxygen and/or nitrate ions as oxygen donors upon contact with water over a long period of time.

2. Composition of claim 1, **characterized in that** during the reaction between Fe(III) nitrate and/or aluminum nitrate and hydrogen peroxide sulfate ions are also added, preferably at most 50 wt.% based on the nitrate used.

3. Composition of claim 1, **characterized in that** the hydroxides of monovalent, divalent and/or trivalent metals, in particular calcium, magnesium, sodium, potassium, are used as the base.

4. Composition according to claims 1 and 3, **characterized in that** calcium hydroxide and/or magnesium hydroxide are used as a base.

5. Composition according to the claims 1 to 4, **characterized in that** the reaction takes place at a pH value above 6, preferable at a pH value between 7 and 10.

6. Composition according to the claims 1 to 5, **characterized in that** the reaction takes place in the presence of oxidation catalysts.

7. Composition of claim 1, **characterized in that** the reaction takes place in the presence of additives, in particular materials that are known to restore waters.

8. Composition according to the claims 1 and 7, **characterized in that** the reaction takes place in the presence of carbonates and/or sulfates.

9. Method for treatment of polluted waters and water sediments,
**characterized in that** a suspension containing Fe(III)- and/or aluminum-containing compounds, which has been produced by reacting Fe(III) nitrate and/or aluminum nitrate and hydrogen peroxide in the presence of a base, is introduced in the water and/or the water sediments.

10. Method of claim 9, **characterized in that** during the reaction between Fe(III) nitrate and/or aluminum nitrate and hydrogen peroxide sulfate ions are also added, preferably at most 50 wt.% based on the nitrate used.

11. Method of claim 9, **characterized in that** the hydroxides of monovalent, divalent and/or trivalent metals, in particular calcium, magnesium, sodium, potassium, are used as the base.

12. Method according to claims 9 and 10, **characterized in that** the reaction takes place at a pH value above 6, preferable at a pH value between 7 and 10.

13. Method according to claims 9 to 11, **characterized in that** the reaction takes place in the presence of oxidation catalysts.

14. Method of claim 9, **characterized in that** the reaction takes place in the presence of additives, in particular materials that are known to restore water.

15. Method according to claims 9 and 13, **characterized in that** the reaction takes place in the presence of carbonates and/or sulfates.

## Revendications

1. Composition avec effet de dépôt,
**caractérisée en ce que** la composition contient un ou plusieurs composés produits par dégradation de nitrate de fer (III) et/ou de nitrate d'aluminium et de peroxyde d'hydrogène en présence d'une base, lesquels libèrent de manière persistante de l'oxygène et/ou des ions nitrate en tant que donneurs d'oxygène au contact de l'eau.

2. Composition selon la revendication 1,
**caractérisée en ce qu'**en cours de dégradation de nitrate de fer (III) et/ou de nitrate d'aluminium avec du peroxyde d'hydrogène, des ions sulfate sont également ajoutés, préférentiellement 50 % maximum en poids du nitrate mis en oeuvre.

3. Composition selon la revendication 1,
**caractérisée en ce que** les hydroxydes de métaux monovalents, bivalents et/ou trivalents, notamment de calcium, magnésium, sodium, potassium sont utilisés comme base.

4. Composition selon les revendications 1 et 3,
**caractérisée en ce que** l'hydroxyde de calcium et/ou l'hydroxyde de magnésium sont utilisés comme base.

5. Composition selon les revendications 1 à 4,
**caractérisée en ce que** la dégradation a lieu à un pH supérieur à 6, préférentiellement à un pH compris entre 7 et 10.

6. Composition selon les revendications 1 à 5,
**caractérisée en ce que** la dégradation a lieu en présence de catalyseurs d'oxydation.

7. Composition selon la revendication 1,
**caractérisée en ce que** la dégradation a lieu en présence de substances additives, notamment de substances connues pour l'assainissement des cours d'eau.

8. Composition selon les revendications 1 et 7,
**caractérisée en ce que** la dégradation a lieu en présence de carbonates et/ou de sulfates.

9. Procédé pour le traitement d'eaux et sédiments de cours d'eau pollués par des substances nocives, **caractérisé en ce qu'**une suspension contenant des composés à teneur en fer (III) et/ou en aluminium, produite par dégradation de nitrate de fer (III) et/ou de nitrate d'aluminium avec du peroxyde d'hydrogène en présence d'une base, est versée dans l'eau et/ou les sédiments de cours d'eau.

10. Procédé selon la revendication 9, **caractérisé en ce qu'**en cours de dégradation de nitrate de fer (III) et/ou de nitrate d'aluminium avec du peroxyde d'hydrogène, des ions sulfate sont également ajoutés, préférentiellement 50 % maximum en poids du nitrate mis en oeuvre.

11. Procédé selon la revendication 9, **caractérisé en ce que** les hydroxydes de métaux monovalents, bivalents et/ou trivalents, notamment de calcium, magnésium, sodium, potassium, sont utilisés comme base, préférentiellement en présence d'hydroxyde de calcium et/ou d'hydroxyde de magnésium.

12. Procédé selon les revendications 9 et 10, **caractérisé en ce que** la dégradation a lieu à un pH supérieur à 6, préférentiellement à un pH compris entre 7 et 10.

13. Procédé selon les revendications 9 à 11, **caractérisé en ce que** la dégradation a lieu en présence de catalyseurs d'oxydation.

14. Procédé selon la revendication 9, **caractérisé en ce que** la dégradation a lieu en présence de substances additives, notamment de substances connues pour l'assainissement des cours d'eau.

15. Procédé selon les revendications 9 et 13, **caractérisé en ce que** la dégradation a lieu en présence de carbonate de calcium et/ou de sulfates.
